# EUROPÄISCHE PATENTSCHRIFT

(11) **EP 3 251 999 B1**
(45) Veröffentlichungstag und Bekanntmachung des Hinweises auf die Patenterteilung: **17.11.2021**
(21) Anmeldenummer: 17020230.3
(22) Anmeldetag: 30.05.2017
(51) Int. Cl.: B66D 1/30, B66D 3/04, B66B 15/04, F16H 55/50

(54) **REIFEN FÜR EINE SEILROLLE, SEILROLLE UND VERFAHREN ZUR HERSTELLUNG EINES REIFENS FÜR EINE SEILROLLE**
TYRE FOR A PULLEY, PULLEY AND METHOD FOR PRODUCING A TYRE FOR A PULLEY
PNEU POUR POULIE, POULIE ET PROCÉDÉ DE FABRICATION D'UN PNEU POUR POULIE

(30) Priorität: 30.05.2016 DE 102016006366
(43) Veröffentlichungstag der Anmeldung: 06.12.2017
(73) Patentinhaber: Becorit GmbH, 45659 Recklinghausen (DE)
(72) Erfinder: Felder, Armin, 44357 Dortmund (DE)
(74) Vertreter: Von Rohr Patentanwälte Partnerschaft mbB

(56) Entgegenhaltungen:
- EP-A1- 0 194 948
- CH-A- 397 236
- FR-A- 732 489
- FR-A1- 2 952 338

## Beschreibung

Die Erfindung betrifft einen Reifen für eine Seilrolle, insbesondere eine Seillaufwerksrolle oder Seilführungsrolle, für Personen und/oder Materialseilbahnen. Darüber hinaus betrifft die vorliegende Erfindung eine Seilrolle mit einem Reifen und ein Verfahren zur Herstellung eines Reifens für eine Seilrolle.

Zur Führung und Unterstützung von Seilen bei Seilbahnen zum Material- und Personentransport werden Seilrollen benötigt. Solche Seilrollen bestehen in der Regel aus einem zentralen Kern, mit dem die Seilrolle auf einer ortsfesten Achse drehbar gelagert ist. Darüber hinaus weisen aus dem Stand der Technik bekannte Seilrollen in der Regel einen Reifen oder ein ringförmiges Futter auf, der bzw. das auf eine zylindrische Außenumfangsfläche des Kerns aufgezogen ist und in einer Außenumfangsfläche eine Seilrille bzw. Laufrille zur Führung eines Seils aufweisen kann.

Der Reifen bzw. das Seilfutter besteht regelmäßig aus Gummi und dient einerseits einer gezielten Seilführung und andererseits zur Schwingungsisolation bzw. Schwingungsentkopplung und -dämpfung von seilinduzierten Vibrationen gegenüber einer Stützkonstruktion.

Aus der EP 0 194 948 A1 ist ein Reifen bekannt, der aus einem radial innenliegenden und einem radial außenliegenden Ringbereich besteht, wobei der äußere Ringbereich eine Härte von ≥ 60 Shore und der innere Ringbereich eine Härte von ≤ 70 Shore aufweist. Die beiden Ringbereiche bestehen dabei jeweils aus einem Elastomer.

Aus der FR 732489 A ist ein Reifen für Seilbahnen bekannt, der aus zwei Ringbereichen besteht. Ein Ring aus Elastomermaterial ist dabei in einem leistenförmigen Ring angeordnet, der aus einem mit Binder imprägnierten Asbest besteht. Aufgrund der Leistenform des zweiten Innenbereichs ist eine formschlüssige Verbindung der beiden Ringbereiche untereinander sichergestellt.

Aus dem Dokument FR 2952338 A1 ist ein aus zwei Ringbereichen bestehender Reifen bekannt. Der innere und der äußere Ringbereich bestehen jeweils aus einem Elastomer mit unterschiedlichem Füllstoffanteil. Die beiden Ringbereiche weisen optische Unterschiede auf, damit eine Abnutzung und/oder Zerstörung des äußeren Ringbereichs durch das bloße Auge erkennbar ist.

CH 397236 A beschreibt ein Material, das aus einem Kautschuk und einem Phenolharz besteht. Das Material kann plattenförmig hergestellt werden und formschlüssig oder durch Verkleben zur Ausfütterung von Scheibenkränzen von Drahtseil-Förderanlagen verwendet werden.

Der Erfindung liegt die Aufgabe zugrunde, einen Reifen für eine Seilrolle, ein Verfahren zur Herstellung eines Reifens und eine Seilrolle mit einem Reifen zur Verfügung zu stellen, wobei der Reifen beständig gegen mechanische Belastungen ist und es insbesondere auch bei höheren Seilkräften und/oder aufgrund von Walkarbeit nicht zu einem Materialbruch oder zum Herausbrechen von Teilen des Reifens bis hin zur Zerstörung des Reifens kommt. Insbesondere sollen sich die mechanischen Eigenschaften des Reifens durch eine geeignete Materialauswahl in einfacher und kostengünstiger Weise an einen bestimmten Einsatzzweck des Reifens bzw. der Seilrolle anpassen lassen.

Der Erfindung liegt weiter die Aufgabe zugrunde, einen Reifen für eine Seilrolle, ein Verfahren zur Herstellung eines Reifens und eine Seilrolle mit einem Reifen zur Verfügung zu stellen, wobei sich der Reifen durch einen geringen Verschleiß und hierdurch eine Erhöhung der Wechselintervalle bzw. Reduzierung der Ausfallzeiten und des Wartungsaufwandes auszeichnet. Auch soll der Verschleiß des Seils bei der Seilführung auf dem Reifen gering sein.

Der Erfindung liegt weiter die Aufgabe zugrunde, einen Reifen für eine Seilrolle, ein Verfahren zur Herstellung eines Reifens und eine Seilrolle mit einem Reifen zur Verfügung zu stellen, wobei die Walkarbeit, der das Reifenmaterial während des Seillaufes unterliegt, gering ist und wobei das Seil ruhig auf dem Reifen bei geringer Systembelastung ablaufen kann,

Der Erfindung liegt schließlich die Aufgabe zugrunde, einen Reifen für eine Seilrolle, ein Verfahren zur Herstellung eines Reifens und eine Seilrolle mit einem Reifen zur Verfügung zu stellen, wobei der Reifen eisbrechende Eigenschaften aufweist und gegen groben Schmutz, wie Blätter oder Fett, tolerant ist. Zudem soll die Aufnahme bzw. Einbettung von Fremdmaterialien weitestgehend ausgeschlossen sein.

Die vorgenannten Aufgaben werden erfindungsgemäß durch einen Reifen mit den Merkmalen von Anspruch 1, durch eine Seilrolle mit den Merkmalen von Anspruch 7 und durch ein Verfahren mit den Merkmalen von Anspruch 8 gelöst. Vorteilhafte Ausgestaltungen sind Gegenstand der Unteransprüche.

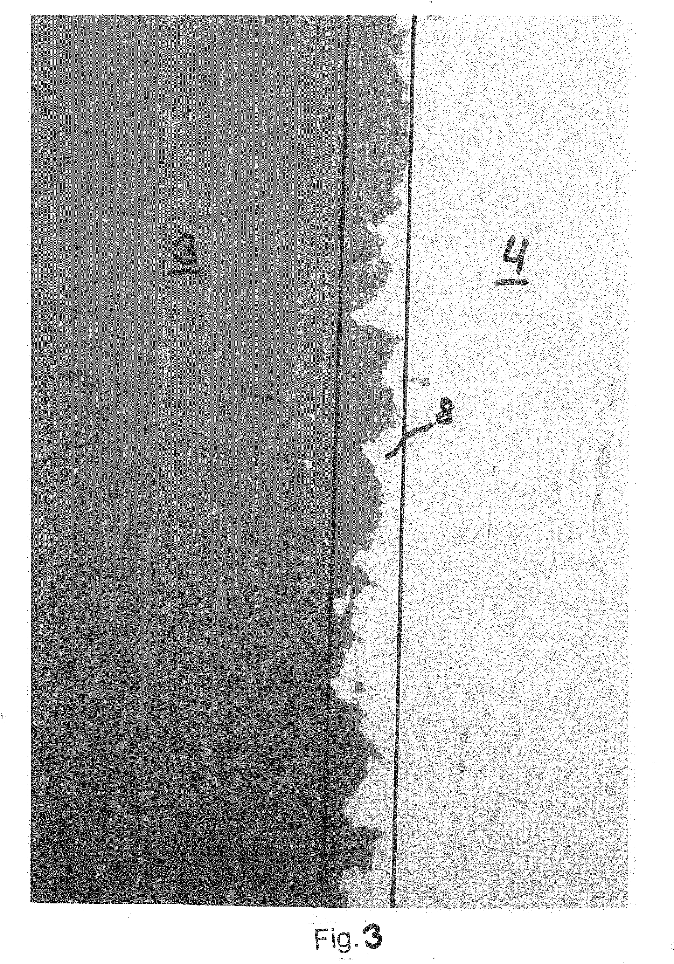

Alle nachfolgend genannten Werteangaben und Bereichsangaben umfassen sämtliche ganzzahlige Zwischenwerte zwischen den Bereichsgrenzen, ohne dass diese ausdrücklich genannt sind. Besonders bevorzugt sind die Ringbereiche unter Einfluss von Zeit, Temperatur und Druck jeweils aus wenigstens eine Elastomerkomponente und wenigstens eine Duoplastkomponete aufweisenden Ausgangsmaterialien mit unterschiedlicher Zusammensetzung und/oder unterschiedlicher Konzentrationen der Komponenten der Ausgangsmaterialien in einem gemeinsamen Pressvorgang erhältlich, wobei ein gemeinsamer Übergangsbereich zwischen beiden Ringbereichen durch chemische Reaktion und Vernetzung der Komponenten der beiden Ausgangsmaterialien miteinander erhältlich ist. Weiter vorzugsweise liegt keine scharfe Trennzone zwischen den Ringbereichen vor, sondern die Ausgangsmaterialien "fließen" im Übergangsbereich ineinander und es bilden sich Phasen des einen Ausgangsmaterials in einer Matrix des anderen Ausgangsmaterials und umgekehrt, Dies ist weiter unten in Fig. 3 gezeigt.

Der erfindungsgemäße Reifen weist wenigstens einen radial innenliegenden inneren Ringbereich und wenigstens einen radial außenliegenden äußeren Ringbereich auf, wobei die Ringbereiche unter Einfluss von Zeit, Temperatur und Druck aus Ausgangsmaterialien mit unterschiedlicher Zusammensetzung und/oder aus Ausgangsmaterialien mit unterschiedlicher Konzentration der Ausgangskomponenten erhältlich sind.

Erfindungsgemäß sind die Ringbereiche des Reifens in einem Übergangsbereich des Reifens chemisch miteinander verbunden. Der Übergangsbereich zwischen beiden Ringbereichen ist insbesondere durch Vernetzung von Komponenten der beiden Ausgangsmaterialien miteinander erhältlich. Dadurch wird eine hohe Stabilität des Reifens im Übergangsbereich gewährleistet. Ein Bruch des Reifens bzw. das Ablösen des äußeren Ringbereichs vom inneren Ringbereich kann auch bei hoher Walkarbeit und hohen Seilkräften weitgehend ausgeschlossen werden. Hierbei weisen der innere Ringbereich und der äußere Ringbereich aufgrund der unterschiedlichen Zusammensetzung der Ausgangsmaterialien und/oder einer unterschiedlichen Konzentration der Ausgangskomponenten in den Ausgangsmaterialien unterschiedliche insbesondere mechanische Eigenschaften auf. Die mechanisehen Eigenschaften des erfindungsgemäßen Reifens ändern sich also im Übergangsbereich zwischen dem inneren Ringbereich und dem äußeren Ringbereich.

In Abhängigkeit vom Einsatzfall können unterschiedliche Ausgangsmaterialien eingesetzt werden, um den Ringbereichen die geforderten (unterschiedlichen) mechanischen Eigenschaften zu verleihen. Dabei kann ein geeignetes Ausgangsmaterial für den äußeren Ringbereich in Abhängigkeit von der Form, der Art, dem Aufbau und dem Material des zu führenden Seils ausgewählt und eingesetzt werden. Beispielsweise lässt sich bedarfsorientiert ein geeigneter Reibwert zwischen Seilrolle und Seil einstellen, was zu einem geringen Verschleiß des Reifens der Seilrolle führt und eine seilschonende Führung des Seils auf dem äußeren Ringbereich zulässt. Die Auswahl des Werkstoffs für den äußeren Ringbereich kann in Abhängigkeit von den besonderen Anforderungen und/oder den Umweltbedingungen des jeweiligen Seilrollen-Seil-Systems erfolgen. Der geringe Verschleiß der erfindungsgemäßen Seilrolle führt zu einer Erhöhung der Wechselintervalle bzw. zu einer Reduzierung der Ausfallzeiten und des Wartungsaufwandes, was insgesamt von Vorteil ist.

Durch eine geeignete Auswahl des Ausgangsmaterials für den inneren Ringbereich des Reifens kann die Walkarbeit, der der innere Reifen während des Seillaufes unterliegt, reduziert werden, und es kommt zu einem ruhigeren Abrollen der Seilrolle verbunden mit einer geringeren Belastung des Seilrollen-Seil-Systems.

Hierbei kann eine Außenumfangsfläche des äußeren Ringbereichs als Führungsfläche für ein Seil vorgesehen sein und eine Seilrille bilden. Der innere Ringbereich kann beispielsweise zur Montage auf einen Kern der Seilrolle vorgesehen sein. Die erfindungsgemäße Seilrolle weist wenigstens einen erfindungsgemäßen Reifen auf, wobei der Reifen auf einen Kern aufgebracht, insbesondere aufgeschrumpft, sein kann und/oder wobei eine Gleit-, Walzen- oder Kugellagerung zur drehbaren Lagerung des Reifens vorgesehen sein kann.

Die erfindungsgemäße Seilrolle lässt sich vorteilhaft auch bei unterschnittenen Seilläufen/Eisbrechern und bei runden, eckigen, ovalen und ähnlichen Geometrien einsetzen.

Beim Heißpressen der Ausgangsmaterialien kommt es unter Einfluss von Zeit, Temperatur und Druck zur Vernetzung und zum Aushärten der Ausgangsmaterialien, so dass aus den Ausgangsmaterialien der innere Ringbereich und der äußere Ringbereich des Reifens erhalten werden. Das erfindungsgemäße Verfahren sieht dabei vor, dass in einem gemeinsamen Pressvorgang unter Einfluss von Zeit, Temperatur und Druck der innere Ringbereich aus einem ersten Ausgangsmaterial und der äußere Ringbereich aus einem zweiten Ausgangsmaterial erhalten werden, wobei das Ausgangsmaterial für den inneren Ringbereich in einen ersten Aufnahmebereich einer Pressform und das Ausgangsmaterial für den äußeren Ringbereich in einen benachbarten zweiten Aufnahmebereich der Pressform eingebracht wird. Die Ausgangsmaterialien werden vorzugsweise granulat- oder pulverförmig in die Aufnahmebereiche der Pressform eingebracht. Die beiden Aufnahmebereiche sind oder werden für einen nachfolgenden Pressvorgang derart räumlich miteinander verbunden, dass die Ausgangsmaterialien beim Pressvorgang an den angrenzenden Rändern der Aufnahmebereiche für eine chemische Reaktion miteinander in Kontakt stehen und/oder kommen und chemisch miteinander reagieren können, wobei es bei der chemischen Reaktion zur Vernetzung und/oder zum Aushärten der Ausgangsmaterialien auch miteinander kommt. Hierdurch wird der Übergangsbereich des Reifens erhalten. Da sich der erfindungsgemäße Reifen in einem Fertigungsschritt fertigen lässt, sind die Fertigungsdauer und die Fertigungskosten des erfindungsgemäßen Reifens entsprechend gering.

Die bei einer Seilführung auf den äußeren Ringbereich des Reifens übertragene Seilkraft wird vorzugsweise lediglich über den inneren Ringbereich in einen Kern oder dergleichen abgeleitet. Über den äußeren Ringbereich ist dagegen vorzugsweise lediglich die Kraftableitung in den inneren Ringbereich vorgesehen. Eine zusätzliche Kraftableitung von dem äußeren Ringbereich in den inneren Ringbereich über gegebenenfalls zwischen dem äußeren Ringbereich und dem inneren Ringbereich vorgesehene Formschlussmittel, wie eingebrachte Hülsen, ist aber auch möglich. Die Formschlussmittel können sich auf beiden Seiten des Übergangsbereichs in die angrenzenden Ringbereiche hinein erstrecken und zu einer zusätzlichen formschlüssigen Verankerung der Ringbereiche miteiander führen. Vorzugsweise sind der innere Ringbereich und der äußere Ringbereich aber lediglich chemisch miteinander verbunden. Formschlusselemente sind dann nicht vorgesehen.

Der erfindungsgemäße Reifen mit den Ringbereichen und dem Übergangsbereich ist einteilig bzw. einstückig ausgebildet. In den Reifen eingebettete Versteifungselemente sind vorzugsweise nicht vorgesehen, grundsätzlich aber nicht ausgeschlossen,

Für eine stabile Verbindung der Ringbereiche miteinander ist es insbesondere von Vorteil, wenn die Ausgangsmaterialien für den inneren Ringbereich und für den äußeren Ringbereich vor und/oder beim Pressvorgang entlang der gemeinsamen Reaktionszone ineinander fließen und/oder sich miteinander vermischen, so dass die Reaktionsfläche vergrößert wird und eine sehr stabile chemische Verbindung zwischen den Ausgangsmaterialien erzielt wird. Vorzugsweise liegen die Ausgangsmaterialien im Übergangsbereich in Form von makroskopisch verteilten Materialbereichen des einen Ausgangsmaterial in dem anderen Ausgangsmaterial vor. Im Übergangsbereich können die Ausgangsmaterialien auch auf molekularer Ebene miteinander vermischt vorliegen. Der Übergangsbereich kann hierbei beispielsweise eine Dicke von wenigstens 2,0 mm, vorzugsweise von wenigstens 5,0 mm, weiter vorzugsweise von wenigstens 10 mm, aufweisen.

Die zur Herstellung des erfindungsgemäßen Reifens eingesetzte Form kann einen ersten ringförmigen Aufnahmebereich für das Ausgangsmaterial für den inneren Ringbereich und einen zweiten ringförmigen Aufnahmebereich für das Ausgangsmaterial für den äußeren Ringbereich aufweisen, wobei die Ausgangsmaterialien vor dem Pressvorgang zunächst durch einen Trennring voneinander getrennt sein können, der vor dem Heißpressen der Ausgangsmaterialien aus der Form entfernt wird. Beim Pressvorgang kann die Temperatur im Bereich zwischen 120 bis 200 °C, vorzugweise zwischen 150 bis 170 °C, liegen. Der Pressdruck kann im Bereich zwischen 800 bis 1000 N/mm² liegen oder auch darüber,

Das Ausgangsmaterial, aus dem der innere Ringbereich oder der äußere Ringbereich erhältlich ist, kann vorzugsweise als Feststoffmischung von wenigstens zwei granulat- oder pulverförmigen Polymerkomponenten mit Zuschlagstoffen, wie beispielsweise Füllstoffen oder Additiven, vorliegen. Bei dem Ausgangsmaterial für den inneren Ringbereich und dem Ausgangsmaterial für den äußeren Ringbereich handelt es sich um ein Compound, das wenigstens eine Elastomerkomponente, wenigstens eine Duroplastkomponente und, vorzugsweise, weitere nicht-polymere oder auch weitere polymere Komponenten aufweist. Bei Pressvorgang kommt es unter Einfluss von Wärme und Zeit zu einer Vernetzung oder zu einer noch stärkeren Vernetzung der Elastomerkomponente und/oder der Duroplastkomponente. Zu diesem Zweck kann das Compound als weitere Komponenten unter anderem Vernetzungsmittel und/oder Aktivatoren aufweisen. Auch eine Vernetzung der Elastomerkomponente mit der Duroplastkomponente ist nicht ausgeschlossen. Beim Pressvorgang kann die Elastomerkomponente oder die Duroplastkomponente eine Matrix bilden, in der die jeweils andere Komponente zusammen mit gegebenenfalls vorgesehenen weiteren Komponenten eingeschlossen ist. Die Komponenten bilden dann Strukturen des einen Kunststoffs in einer dominierenden Matrix. Dabei bildet zumeist der Kunststoff mit höherem Anteil die Matrix.

Die Duroplastkomponente kann beim Pressvorgang für sich allein oder mit Reaktionsmitteln, beispielweise Härtern oder Beschleunigern, durch Polymerisation oder Polyaddition aushärten und, vorzugsweise, eine duroplastische Matrix für die Elastomerkomponente bilden. Die Elastomerkomponente kann beim Pressvorgang insbesondere mit einem Vernetzungsmittel in einen elastischen Zustand überführt werden. Insbesondere kann die Elastomerkomponente ausgewählt sein aus der Gruppe der teilvernetzten, insbesondere mit Schwefel vulkanisierbaren Kautschuke, Grundsätzlich sind aber auch andere Vernetzungsreaktionen möglich, die ohne den Einsatz von elementarem Schwefel auskommen.

Vorzugsweise kann der innere Ringbereich stärkere elastomere Werkstoffeigenschaften als der äußere Ringbereich und der äußere Ringbereich stärkere duroplastische Werkstoffeigenschaften als der innere Ringbereich aufweisen. Es ist dann zweckmäßig, wenn der Anteil der Elastomerkomponente im Ausgangsmaterial für den inneren Ringbereich größer als im Ausgangsmaterial für den äußeren Ringbereich ist und/oder wenn der Anteil der Duroplastkomponente im Ausgangsmaterial für den äußeren Ringbereich größer als im Ausgangsmaterial für den inneren Ringbereich ist. Durch Veränderung der Konzentration der Elastomerkomponente und/oder Konzentration der Duroplastkomponente und ggf. der Konzentration der wenigstens einen weiteren Komponente im jeweiligen Ausgangsmaterial lassen sich insbesondere die mechanischen Eigenschaften der Ringbereiche in einfacher Weise an die jeweiligen Anforderungen anpassen. Für den inneren Ringbereich ist dies insbesondere eine ausreichend hohe Elastizität und für den äußeren Ringbereich eine ausreichende Härte und damit eine hohe Verschleißfestigkeit.

Durch eine ausreichend hohe Elastizität des inneren Ringbereichs kann eine radiale Nachgiebigkeit erreicht werden, die ausreicht, um die beim Betrieb der Seilrolle entstehenden Seilkräfte abzufedern und den Reifen kraftschlüssig über den inneren Ringbereich montieren zu können. Bei einer kraftschlüssigen Verbindung zwischen dem Reifen und beispielsweise einem Laufrad kann die Haltekraft des Reifens auf dem Laufrad dann lediglich durch elastische Rückstellkräfte des inneren Ringbereichs erreicht werden. Weist der Reifen im inneren Ringbereich allerdings eine zu hohe Elastizität auf, kann es durch Walkarbeit zu einer Zerstörung des Reifens kommen. Vorzugsweise beträgt der Wert des Elastizitätsmoduls nach EN ISO 527-1 des Reifens im inneren Ringbereich daher mehr als 100 N/mm² und weniger als 150 N/mm², vorzugsweise weniger als 130 N/mm², weiter vorzugsweise weniger als 120 N/mm².

Der äußere Ringbereich kann dagegen unter Einwirkung einer Seilkraft im Wesentlichen unverformbar sein, was eine vergleichsweise geringe Elastizität voraussetzt. Der Wert des Elastizitätsmoduls nach EN ISO 527-1 des Reifens im äußeren Ringbereich kann daher größer oder gleich 130 N/mm², vorzugsweise größer oder gleich 150 N/mm², weiter vorzugsweise größer oder gleich 200 N/mm², besonders bevorzugt größer oder gleich 500 N/mm², insbesondere bevorzugt größer oder gleich 600 N/mm², betragen.

Der Reifen kann im inneren Ringbereich eine Bruchdehnung nach EN ISO 527-1 von mehr als 20 %, vorzugsweise von mehr als 25 %, besonders bevorzugt von ca. 30 % oder mehr aufweisen. Die Bruchdehnung des Reifens im äußeren Ringbereich kann der Bruchdehnung des Reifens im inneren Ringbereich entsprechen. Vorzugsweise ist aber die Bruchdehnung im äußeren Ringbereich kleiner als die Bruchdehnung im inneren Ringbereich, Die Bruchdehnung nach EN ISO 527-1 des Reifens im äußeren Ringbereich kann dann weniger als 30%, vorzugsweise weniger als 20 %, weiter vorzugweise weniger als 15 %, besonders bevorzugt weniger als 10 % betragen.

Vorzugsweise weist jeder Ringbereich über seine radiale Erstreckung bis zum Übergangsbereich eine in radialer Richtung im wesentlichen gleichbleibende Materialzusammensetzung mit in radialer Richtung im wesentlichen homogenen mechanischen Eigenschaften auf. Im Übergangsbereich ändern sich dann die Materialzusammensetzung und/oder die mechanischen Eigenschaften des Reifens.

Das Ausgangsmaterial für den inneren Ringbereich und das Ausgangsmaterial für den äußeren Ringbereich weisen wenigstens eine chemisch gleiche oder zu einer gleichen Gruppe gehörende Elastomerkomponente und/oder wenigstens eine chemisch gleiche oder zu einer gleichen Gruppe gehörende Duroplastkomponente auf. Zudem können beide Ausgangsmaterialien wenigstens eine chemisch gleiche oder zu einer gleichen Gruppe gehörende weitere Komponente aufweisen. Besonders bevorzugt weisen beide Ausgangsmaterialien chemisch gleiche oder zu einer gleichen Gruppe gehörende Elastomerkomponeten mit unterschiedlichen Konzentrationen auf. Das Gleiche gilt vorzugsweise auch für die Duroplastkomponente. Durch Änderung der Konzentrationen der Elastomer- und Duroplastkomponenten in den Ausgangsmaterialien lassen sich in einfacher Weise die mechanischen Eigenschaften der Ringbereiche des Reifens einstellen und modifizieren. Durch die Verwendung von chemisch ähnlichen oder gleichen Elastomer- und Duroplastkomponenten in den Ausgangsmaterialien der beiden Ringbereiche werden eine hohe Kompatibilität zwischen den Ausgangsmaterialien und hohe Bindungskräfte der chemischen Verbindung zwischen den Ausgangsmaterialien im Übergangsbereich sichergestellt. Gleiche Duroplastkomponenten in den Ausgangsmaterialien für den inneren Ringbereich und für den äußeren Ringbereich können beispielsweise beim Pressvorgang miteinander vernetzen und gemeinsam aushärten, so dass eine stabile chemische Verbindung der Ausgangsmaterialien im Übergangsbereich zwischen den Ringbereichen erzielt wird.

Die Elastomerkomponente kann ausgewählt sein aus der Gruppe der Kautschuke, insbesondere der synthetischen Kautschuke, wie Butadien-Kautschuk oder Styrol-Butadien-Kautschuk oder Nitrilkautschuk oder Chloropren-Kautschuk und/oder Ethylen-Propylen-Kautschuk und/oder Ethylen-Propylen-Dien-Kautschuk oder deren Mischungen, und/oder im Verbund mit wenigstens einem thermoplastischen Kunststoff vorliegen.

Die Duroplastkomponente kann vorzugsweise ausgewählt sein aus der Gruppe der Harze, vorzugsweise der Reaktionsharze, weiter vorzugsweise der Phenolharze, Reaktionsharze sind flüssige oder verflüssigbare Kunstharze, die durch Polymerisation oder Polyaddition zu Duromeren aushärten können.

Die Elastomerkomponente kann in dem Ausgangsmaterial in einem Verbund mit einem thermoplastischen Material vorliegen, wobei das Ausgangsmaterial weiterhin wenigstens eine Duroplastkomponente und, vorzugsweise, wenigstens eine weitere Komponente aufweisen kann. Das thermoplastische Material kann eine Matrix für die Elastomerkomponente bilden und ausgewählt sein aus der Gruppe der Thermoplasten, insbesondere der Polyamide, der Polyester, der Polyolefine oder der Polyacetale, und/oder deren Copolymeren. Das Matrixmaterial kann auch ausgewählt sein aus der Gruppe der thermoplastischen Elastomere, insbesondere aus der Gruppe der thermoplastischen Copolyamide (TPE-A oder TPA), der thermoplastischen Elastomere auf Olefinbasis (TPE-O oder TPO), vorwiegend PP/EPDM, und/oder aus der Gruppe der vernetzten thermoplastischen Elastomere auf Olefinbasis (TPE-V oder TPV), vorwiegend PP/EPDM, und/oder aus der Gruppe der thermoplastischen Elastomere auf Urethanbasis (TPE-U oder TPU) und/oder aus der Gruppe der thermoplastischen Polyesterelastomere / thermoplastischen Copolyester (TPE-E oder TPC), und/oder aus der Gruppe der Styrol-Blockcopolymere (TPE-S oder TPS), vorwiegend SBS, SEBS, SEPS, SEEPS und MBS, und/oder deren Copolymeren.

Die weitere Komponente kann insbesondere ausgewählt sein aus der Gruppe der Füllstoffe, wie Silikate und/oder Ruße und/oder Metalloxide, und/oder aus der Gruppe der Aktivatoren, wie Zinkoxid, und/oder aus der Gruppe der Vernetzer, wie Schwefel oder Schwefelderivaten, und/oder aus der Gruppe der Weichmacher und/oder der Alterungsschutzmittel und/oder der Antioxidationsmittel und/oder der Flammschutzmittel.

In Zusammenhang mit der Erfindung durchgeführte Versuche haben gezeigt, dass ausgezeichnete mechanische Eigenschaften des Reifens im inneren Ringbereich dann erreicht werden können, wenn das Ausgangsmaterial für den inneren Ringbereich die Elastomerkomponente in einer Konzentration von 30 bis 65 Gew.-%, insbesondere von 35 bis 60 Gew.-%, und die Duroplastkomponente in einer Konzentration von 1 bis 25 Gew.-%, insbesondere von 5 bis 20 Gew.-%, aufweist und, gegebenenfalls, wenigstens einen Füllstoff in einer Gesamtkonzentration von 10 bis 40 Gew.-%, vorzugsweise 15 bis 35 Gew.-%, und/oder gegebenenfalls wenigstens einen Aktivator in einer Gesamtkonzentration von 0,05 bis 4 Gew.-%, vorzugsweise 0,1 bis 2 Gew.-%, und/oder gegebenenfalls wenigstens ein Vernetzungsmittel in einer Gesamtkonzentration von 0,05 bis 10 Gew.-%, vorzugsweise 0,1 bis 4 Gew.%, und/oder gegebenenfalls wenigstens einen Weichmacher in einer Gesamtkonzentration von 0,05 bis 4 Gew.-%, vorzugsweise 0,1 bis 2 Gew.-%, und/oder gegebenenfalls wenigstens ein Alterungsschutzmittel in einer Gesamtkonzentration von 0,05 bis 10 Gew.-%, vorzugsweise 0,1 bis 5 Gew.-%, und/oder gegebenenfalls wenigstens ein Antioxidationsmittel in einer Gesamtkonzentration von 0,05 bis 4 Gew.-%, vorzugsweise 0,1 bis 2 Gew.-%, jeweils bezogen auf die Gesamtmasse des Ausgangsmaterials. Die beschriebene Zusammensetzung stellt insbesondere eine ausreichend hohe Elastizität des inneren Ringbereichs sicher, um die beim Betrieb der Seilrolle entstehende Seilkräfte abzufedern und den Reifen kraftschlüssig auf einen Kern montieren zu können.

Im Übrigen konnten die durchgeführten Versuche bestätigen, dass hervorragende mechanische Eigenschaften des Reifens im äußeren Ringbereich dann erreicht werden, wenn das Ausgangsmaterial für den äußeren Ringbereich die Elastomerkomponente in einer Konzentration von 15 bis 45 Gew.-%, insbesondere von 20 bis 40 Gew.-%, und die Duroplastkomponente in einer Konzentration von 10 bis 50 Gew.-%, insbesondere von 20 bis 40 Gew.-%, aufweist und, gegebenenfalls, wenigstens einen Füllstoff in einer Gesamtkonzentration von 10 bis 50 Gew.-%, vorzugsweise 15 bis 40 Gew.-%, und/oder gegebenenfalls wenigstens einen Aktivator in einer Gesamtkonzentration von 0,05 bis 4 Gew.-%, vorzugsweise 0,1 bis 2 Gew.-%, und/oder gegebenenfalls wenigstens einen Vernetzer in einer Gesamtkonzentration von 0,05 bis 10 Gew.-%, vorzugsweise 0,1 bis 4 Gew.-%, und/oder gegebenenfalls wenigstens einen Weichmacher in einer Gesamtkonzentration von 0,05 bis 4 Gew.-%, vorzugsweise 0,1 bis 2 Gew.-%, und/oder gegebenenfalls wenigstens ein Alterungsschutzmittel in einer Gesamtkonzentration von 0,05 bis 10 Gew.-%, vorzugsweise 0,1 bis 5 Gew.-%, und/oder gegebenenfalls wenigstens ein Antioxidationsmittel in einer Gesamtkonzentration von 0,05 bis 4 Gew.-%, vorzugsweise 0,1 bis 2 Gew.-%, und/oder gegebenenfalls wenigstens ein Flammschutzmittel in einer Gesamtkonzentration von 1 bis 20 Gew.-%, vorzugsweise 5 bis 15 Gew.-%, jeweils bezogen auf die Gesamtmasse des Ausgangsmaterials. Hiermit lässt sich insbesondere ein geringer Verschleiß des Reifens und eine seilschonende Führung des Seils auf einer Umfangsfläche des äußeren Ringbereichs erreichen, wobei der Reifen eisbrechende Eigenschaften aufweisen kann und gegen groben Schmutz sehr tolerant ist.

Durch eine ausreichend hohe Härte kann eine hohe Verschleißfestigkeit des Reifens im äußeren Ringbereich erreicht werden. Die Shore-Härte nach DIN ISO 7619-1 des Reifens im äußeren Ringbereich kann größer oder gleich 40 Shore-D, vorzugsweise größer oder gleich als 50 Shore-D, weiter vorzugsweise größer oder gleich 60 Shore-D, besonders bevorzugt größer oder gleich 70 Shore-D, und/oder kleiner oder gleich 100 Shore-D, vorzugsweise kleiner oder gleich 90 Shore-D, weiter vorzugsweise kleiner oder gleich 80 Shore-D, besonders bevorzugt kleiner oder gleich 70 Shore-D sein. Bei einer besonders vorteilhaften Ausgestaltung des erfindungsgemäßen Reifens mit sehr gutem Verschleißverhalten kann der Reifen im äußeren Ringbereich eine Shore-Härte nach DIN ISO 7619-1 im Bereich zwischen 40 und 60 Shore-D, vorzugsweise von ca. 50 Shore-D, aufweisen. Bei einer anderen vorteilhaften Ausgestaltung kann die Shore-Härte nach DIN ISO 7619-1 im äußeren Ringbereich im Bereich zwischen 65 bis 85 Shore-D, vorzugsweise bei ca. 75 Shore-D, liegen.

Der Reifen weist im inneren Ringbereich aufgrund anderer Anforderungen an die mechanischen Eigenschaften vorzugsweise eine geringere Härte als im äußeren Ringbereich auf. Die Shore-Härte des Reifens im inneren Ringbereich nach DIN ISO 7619-1 kann größer oder gleich 30 Shore-D, vorzugsweise größer oder gleich 35 Shore-D, weiter vorzugsweise größer oder gleich 40 Shore-D, besonders bevorzugt größer oder gleich 50 Shore-D, und/oder kleiner oder gleich 70 Shore-D, vorzugsweise kleiner oder gleich 60 Shore-D, weiter vorzugsweise kleiner oder gleich 55 Shore-D, besonders bevorzugt kleiner oder gleich 50 Shore-D, sein. Bei im Rahmen der Erfindung durchgeführten Versuchen zeigte sich, dass eine Shore-Härte des Reifens im inneren Ringbereich zwischen 38 bis 58 Shore-D, vorzugsweise ca. 48 Shore-D, besonders vorteilhaft ist.

Bei im Rahmen der Erfindung durchgeführten Versuchen zeigte sich weiter, dass sich auch eine bestimmte Härteabweichung zwischen der Shore-Härte des Reifens im äußeren Ringbereich und der Shore-Härte des Reifens im inneren Ringbereich vorteilhaft auf die Stabilität der chemischen Verbindung im Übergangsbereich zwischen den Ringbereichen auswirken kann. In diesem Zusammenhang kann die Shore-Härte nach DIN ISO 7619-1 des Reifens im äußeren Ringbereich größer als die Shore-Härte des Reifens im inneren Ringbereich sein. Die Härteabweichung kann wenigstens 5 Shore-D, vorzugsweise wenigstens 10 Shore-D, weiter vorzugsweise wenigstens 15 Shore-D, besonders bevorzugt wenigstens 20 Shore-D betragen.

### Ausführungsbeispiele

Zur Herstellung von Reifen mit polymeren Werkstoffeigenschaften mit einem radial innenliegenden inneren Ringbereich und einem radial außenliegenden äußeren Ringbereich zur Verwendung bei Seilrollen wurden zwei granulatförmige Ausgangsmaterialien für die Ringbereiche getrennt voneinander in zwei aneinander angrenzende Aufnahmebereiche einer Pressform eingebracht. Beide Ausgangsmaterialien setzten sich jeweils aus einer Elastomerkomponente und einer Duroplastkomponente sowie weitere Komponenten, wie Füllstoffen, Vernetzungsmitteln, Härtern und/oder Aktivatoren bzw. Katalysatoren zusammen, wobei chemisch gleiche oder zu einer gleichen Gruppe gehörende Elastomerkomponenten und chemisch gleiche oder zu einer gleichen Gruppe gehörende Duroplastkomponenten in beiden Ausgangsmaterialien aber mit unterschiedlichen Konzentrationen vorlagen.

Die Aufnahmebereiche der Pressform waren zunächst durch einen Trennring voneinander getrennt, wobei das Ausgangsmaterial für den inneren Ringbereich in einen ersten Aufnahmebereich und das Ausgangsmaterial für den äußeren Ringbereich in einen zweiten Aufnahmebereich eingebracht wurde. Die beiden Ausgangsmaterialien wurden also getrennt voneinander in die beiden Aufnahmebereiche eingebracht. Anschließend wurde der Trennring entfernt, so dass die Aufnahmebereiche räumlich miteinander verbunden waren und die in die Aufnahmebereiche eingebrachten Ausgangsmaterialien bereits vor oder während eines nachfolgenden Pressvorgangs miteinander in Kontakt standen und eine gemeinsame Reaktionszone bildeten.

In einem gemeinsamen Pressvorgang wurden die Ausgangsmaterialien in einer Heißpresse bei einer Temperatur zwischen 120 °C bis 200 °C, vorzugweise zwischen 150 °C bis 170 °C, und bei einem Pressdruck vorzugsweise zwischen 800 und 1500 N/mm² gepresst und dabei vernetzt und gehärtet. Unter Einfluss von Zeit, Temperatur und Druck wurde so der innere Ringbereich aus dem ersten Ausgangsmaterial und der äußere Ringbereich aus dem zweiten Ausgangsmaterial erhalten. Da die beiden Ausgangsmaterialien bei dem Pressvorgang miteinander in Kontakt standen, kam es auch zu Vernetzungsreaktionen zwischen den Ausgangsmaterialien. So konnte ein Übergangsbereich zwischen dem inneren Ringbereich und dem äußeren Ringbereich erhalten werden, in dem beide Ausgangsmaterialien miteinander vernetzt vorlagen.

Bei der Vernetzung der Ausgangsmaterialien konnten Makromoleküle der Elastomerkomponente (Kautschuk) über Schwefelbrücken miteinander verbunden und vulkanisiert werden. Hierdurch gingen die plastischen Eigenschaften der Elastomerkomponente bzw. der Mischung der Elastomerkomponente mit Schwefel oder schwefelspendenden Stoffen, Füllstoffen und Katalysatoren zur Erhöhung der Reaktionsgeschwindigkeit verloren; die Elastomerkomponente wurde mittels des Verfahrens der Vulkanisation vom plastischen in einen elastischen Zustand überführt.

Die härtbare Duroplastkomponente (Reaktionsharz) konnte beim Heißpressen für sich allein oder mit Reaktionsmitteln, wie Härtern oder Beschleunigern, zu einem duroplastischen Kunststoff umgesetzt werden und eine duroplastische Matrix für die Elastomerkomponente bilden. Nach der Aushärtung der Duroplastkomponente lagen vernetzte Polymere vor. Die durch Vernetzung erzeugten Duroplaste besaßen insbesondere eine im Vergleich zur vulkanisierten Elastomerkomponente höhere Härte.

### Beispiel 1

Als Ausgangsmaterial für den inneren Ringbereich wurde ein Compound mit nachfolgender Zusammensetzung eingesetzt:

| | |
|---|---|
| 35 bis 60 Gew.-% | Styrol-Butadien-Kautschuk |
| 5 bis 20 Gew.-% | Phenolharz |
| 15 bis 35 Gew.-% | Silikate und Ruße |
| 0,1 bis 2 Gew.-% | Zinkoxid |
| 0,1 bis 4 Gew.-% | Schwefel und Derivate |
| 0,1 bis 2 Gew.-% | Weichmacher |
| 0,1 bis 5 Gew.-% | Alterungsschutzmittel |
| 0,1 bis 2 Gew.-% | Antioxidationsmittel |

Als Ausgangsmaterial für den äußeren Ringbereich wurde ein Compound mit nachfolgender Zusammensetzung eingesetzt:

| | |
|---|---|
| 20 bis 40 Gew.-% | Styrol-Butadien-Kautschuk |
| 25 bis 40 Gew.-% | Phenolharz |
| 20 bis 30 Gew.-% | Silikate und Metalloxide |
| 5 bis 15 Gew.-% | anorganische Flammschutzmittel |
| 0,1 bis 4 Gew.-% | Schwefel und Derivate |
| 0,1 bis 2 Gew.-% | Zinkoxid |

Die Herstellung des Reifens erfolgte wie oben beschrieben. Die mechanischen Eigenschaften des erhaltenen Reifens wurden untersucht.

Die Shore-Härte nach DIN ISO 7619-1 des Reifens im inneren Ringbereich lag im Bereich 48 ± 10 Shore-D, wobei die Shore-Härte des Reifens im äußeren Ringbereich im Bereich 75 ± 10 Shore-D lag. Beide Ringbereiche des Reifens waren nach dem Pressvorgang in einem gemeinsamen Übergangsbereich mit einer Breite vorzugsweise zwischen 3 und 15 mm, insbesondere zwischen 5 und 10 mm, durch Vernetzung der Ausgangsmaterialien chemisch miteinander verbunden. Für die Festigkeiten und die Bruchdehnung nach EN ISO 527-1 des Reifens konnten folgende Werte ermittelt werden:

| | |
|---|---|
| Zugfestigkeit: | 150 ± 10 N/mm² |
| Druckfestigkeit: | 55 ± 10 N/mm² |
| Biegefestigkeit: | 10 ± 2 N/mm² |
| Bruchdehnung: | 75 ± 10 N/mm² |

### Beispiel 2

Als Ausgangsmaterial für den inneren Ringbereich wurde ein Compound mit der Zusammensetzung gemäß Beispiel 1 eingesetzt. Als Ausgangsmaterial für den äußeren Ringbereich wurde ein Compound mit nachfolgender Zusammensetzung eingesetzt:

| | |
|---|---|
| 20 bis 40 Gew.-% | Polychloropren-Kautschuk |
| 20 bis 40 Gew.-% | Phenolharz |
| 20 bis 45 Gew.-% | Silikate und Metalloxide |
| 1 bis 10 Gew.-% | anorganische Flammschutzmittel |
| 0,1 bis 4 Gew.-% | Schwefel und Derivate |
| 0,1 bis 2 Gew.-% | Zinkoxid |
| 0,1 bis 2 Gew.-% | Weichmacher |

Die Herstellung des Reifens erfolgte wie oben beschrieben. Die mechanischen Eigenschaften des erhaltenen Reifens wurden untersucht.

Die Shore-Härte nach DIN ISO 7619-1 des Reifens im äußeren Ringbereich lag bei 50 ± 10 Shore-D.

Für die Festigkeiten und die Bruchdehnung nach EN ISO 527-1 des Reifens konnten folgende Werte ermittelt werden:

| | |
|---|---|
| Zugfestigkeit: | 150 ± 10 N/mm² |
| Druckfestigkeit: | 35 ± 10 N/mm² |
| Biegefestigkeit: | 8 ± 2 N/mm² |
| Bruchdehnung: | 66 ± 10 N/mm² |

Weitere Vorteile, Merkmale, Eigenschaften und Aspekte der vorliegenden Erfindung ergeben sich aus der folgenden Beschreibung einer bevorzugten Ausführungsform der Erfindung anhand der Zeichnung. Es zeigen
- Fig. 1: eine schematische Draufsicht auf einen erfindungsgemäßen Reifen,
- Fig. 2: eine schematische Darstellung einer Seilrolle mit dem in Fig. 1 gezeigten Reifen und
- Fig. 3: eine fotografische Teil-Darstellung des Übergangsbereiches von zwei Ringbereichen eines erfindungsgemäßen Reifens.

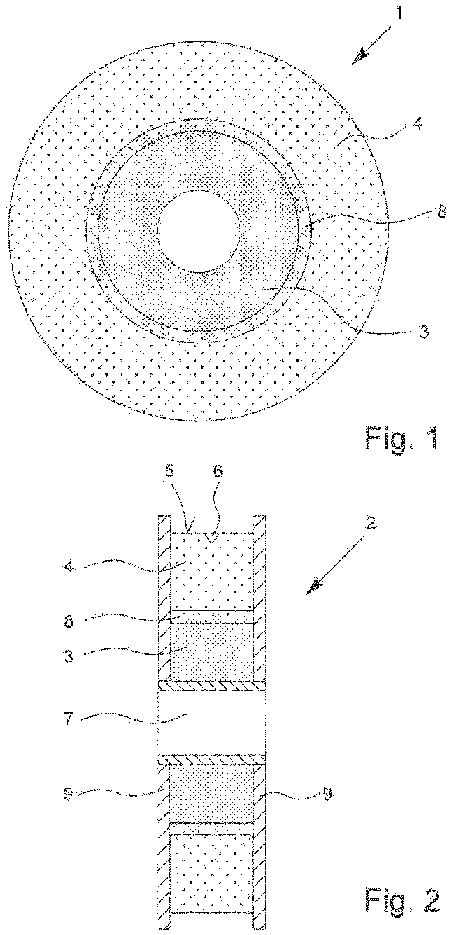

In Fig. 1 ist ein Reifen 1 für eine in Fig. 2 gezeigte Seilrolle 2 dargestellt. Der Reifen 1 weist einen radial innenliegenden inneren Ringbereich 3 und radial ausliegenden äußeren Ringbereich 4 auf, wobei eine Außenumfangsfläche 5 des äußeren Ringbereichs 4 eine Seilrille 6 bildet und der innere Ringbereich 3 beispielsweise zur Montage auf einen in Fig. 2 dargestellten Kern 7 der Seilrolle 2 vorgesehen ist. Bei dem Kern kann es sich beispielsweise um ein Lagerelement einer Gleit-, Walzenoder Kugellagerung handeln. Beide Ringbereiche 3, 4 sind in einem gemeinsamen Übergangsbereich 8 chemisch miteinander verbunden.

Der äußere Ringbereich 2 und der innere Ringbereich 3 des Reifens 1 sind in einem gemeinsamen Fertigungsschritt unter Einfluss von Zeit, Temperatur und Druck aus zwei Ausgangsmaterialien erhältlich, wobei jedes Ausgangsmaterial wenigstens eine Elastomerkomponente, wenigstens eine Duroplastkomponente und weitere Komponenten aufweist. Der Anteil der Elastomerkomponente im Ausgangsmaterial, aus dem der innere Ringbereich 3 erhältlich ist, ist vorzugsweise größer als im Ausgangsmaterial, aus dem der äußere Ringbereich 4 erhältlich ist, und der Anteil der Duroplastokomponente im Ausgangsmaterial, aus dem der äußere Ringbereich 4 erhältlich ist, ist vorzugsweise größer als im Ausgangsmaterial, aus dem der innere Ringbereich 3 erhältlich ist. Im Übrigen weisen beide Ausgangsmaterialien einen Kautschuk als Elastomerkomponente und ein Reaktionsharz als Duroplastkomponente auf. Die Elastomerkomponente und die Duroplastkomponente bilden nach Gewichtsanteilen die Hauptkomponenten der Ausgangsmaterialien.

Bei der Herstellung des Reifens 1 werden die beiden Ausgangsmaterialien getrennt voneinander in zwei Aufnahmebereiche einer nicht gezeigten Pressform eingebracht und in einem gemeinsamen Pressvorgang unter Einfluss von Zeit, Temperatur und Druck vernetzt und gehärtet. Bei dem Pressvorgang stehen die beiden Ausgangsmaterialien an den Rändern der Aufnahmebereiche miteinander in Kontakt und bilden eine gemeinsame Reaktionszone, in der es auch zur Vernetzung der beiden Ausgangsmaterialien miteinander kommt. Im Übergangsbereich 8 des Reifens 1 sind der innere Ringbereich 3 und der äußere Ringbereich 4 dann chemisch miteinander verbunden, woraus eine hohe Stabilität des Reifens 1 resultiert. Das Aufziehen des Reifens 1 auf den Kern 6 kann durch Aufschrumpfen auf den Kern 6 nach Erwärmung des Reifens 1 erfolgen. Anschließend können in üblicher Weise zwei Flanschscheiben auf den Kern montiert bzw. aufgebracht werden, zwischen denen der Reifen 1 angeordnet ist.

Fig. 3 zeigt den Ausschnitt aus einer fotografischen Darstellung des Reifens 1 mit einem inneren Ringbereich 3 und einem äußeren Ringbereich 4 erhältlich aus den Ausgangsmaterialen nach Beispiel 1. Ähnliche Ergebnisse werden erreicht, wenn das Ausgangsmaterial für den äußeren Ringbereich 4 nach Beispiel 2 verwendet wird, Es liegt keine scharfe Trennzone zwischen den Ringbereichen 3, 4 vor, sondern die Ausgangsmaterialien "fließen" im Übergangsbereich 8 ineinander und es bilden sich Phasen des einen Ausgangsmaterials in einer Matrix des anderen Ausgangsmaterials und umgekehrt. Der Übergangsbereich 8 kann eine Breite von weniger als 20 mm, vorzugsweise weniger als 15 mm, weiter vorzugsweise weniger als 10 mm, aufweisen,

### Bezugszeichenliste:

| | | | |
|---|---|---|---|
| 1 | Reifen | 6 | Seilrille |
| 2 | Seilrolle | 7 | Kern |
| 3 | Ringbereich | 8 | Übergangsbereich |
| 4 | Ringbereich | 9 | Flanschscheibe |
| 5 | Außenumfangsfläche | | |

## Patentansprüche

1. Reifen (1) für eine Seilrolle (2), insbesondere Seillaufwerksrolle oder Seilführungsrolle, für Personen- und/oder Materialseilbahnen, mit wenigstens einem radial innenliegenden inneren Ringbereich (3) und wenigstens einem radial außenliegenden äußeren Ringbereich (4), **dadurch gekennzeichnet, dass** die Ringbereiche (3, 4) unter Einfluss von Zeit, Temperatur und Druck aus Ausgangsmaterialien mit unterschiedlicher Zusammensetzung und/oder unterschiedlicher Konzentration der Komponenten der Ausgangsmaterialien in einem gemeinsamen Pressvorgang erhältlich sind, wobei der innere Ringbereich (3) und der äußere Ringbereich (4) jeweils aus einem wenigstens eine Elastomerkomponente und wenigstens eine Duroplastkomponente und gegebenenfalls wenigstens eine weitere Komponente aufweisenden Ausgangsmaterial erhältlich sind, wobei das Ausgangsmaterial für den inneren Ringbereich (3) und das Ausgangsmaterial für den äußeren Ringbereich (4) wenigstens eine chemisch gleiche oder zu einer gleichen Gruppe gehörende Elastomerkomponente und/oder wenigstens eine chemisch gleiche oder zu einer gleichen Gruppe gehörende Duroplastkomponente aufweisen und wobei ein gemeinsamer Übergangsbereich (8) zwischen beiden Ringbereichen (3, 4) durch chemische Reaktion der Ausgangsmaterialien miteinander erhältlich ist.

2. Reifen (1) nach Anspruch 1, **dadurch gekennzeichnet, dass** der Anteil der Elastomerkomponente im Ausgangsmaterial für den inneren Ringbereich (3) größer als im Ausgangsmaterial für den äußeren Ringbereich (4) ist und/oder dass der Anteil der Duroplastkomponente im Ausgangsmaterial für den äußeren Ringbereich (4) größer als im Ausgangsmaterial für den inneren Ringbereich (3) ist.

3. Reifen (1) nach einem der vorhergehenden Ansprüche, **dadurch gekennzeichnet, dass** der innere Ringbereich (3), der äußere Ringbereich (4) und der Übergangsbereich (8) in einem gemeinsamen Fertigungsschritt unter Einfluss von Zeit, Temperatur und Druck aus den Ausgangsmaterialien erhältlich sind.

4. Reifen (1) nach einem der vorhergehenden Ansprüche, **dadurch gekennzeichnet, dass** die Elastomerkomponente ausgewählt ist aus der Gruppe der Kautschuke, vorzugsweise der synthetischen Kautschuke, weiter vorzugsweise der Butadien-Kautschuke und/oder der Styrol-Butadien-Kautschuke und/oder der Nitrilkautschuke und/oder der Chloropren-Kautschuke und/oder der Ethylen-Propylen-Kautschuke und/oder der Ethylen-Propylen-Dien-Kautschuke oder deren Mischungen, und/oder dass die Elastomerkomponente im Verbund mit wenigstens einem thermoplastischen Kunststoff vorliegt.

5. Reifen (1) nach einem der vorhergehenden Ansprüche, **dadurch gekennzeichnet, dass** die Duroplastkomponente ausgewählt ist aus der Gruppe der Harze, vorzugsweise der Reaktionsharze, weiter vorzugsweise der Phenolharze.

6. Reifen (1) nach einem der vorhergehenden Ansprüche, **dadurch gekennzeichnet, dass** das Ausgangsmaterial für den äußeren Ringbereich (4) die Elastomerkomponente in einer Gesamtkonzentration von 10 bis 50 Gew.-%, vorzugsweise von 15 bis 45 Gew.-%, weiter vorzugsweise von 20 bis 40 Gew.-%, und die Duroplastkomponente in einer Gesamtkonzentration von 10 bis 60 Gew.-%, vorzugsweise von 15 bis 50 Gew.-%, weiter vorzugsweise von 20 bis 40 Gew.-%, aufweist und/oder dass das Ausgangsmaterial für den inneren Ringbereich (3) die Elastomerkomponente in einer Gesamtkonzentration von 20 bis 75 Gew.-%, vorzugsweise von 30 bis 65 Gew.-%, weiter vorzugsweise von 35 bis 60 Gew.-%, und die Duroplastkomponente in einer Gesamtkonzentration von 1 bis 30 Gew.-%, vorzugsweise von 5 bis 20 Gew.-%, aufweist, jeweils bezogen auf die Gesamtmasse des Ausgangsmaterials.

7. Seilrolle (2) mit einem Reifen (1) nach einem der vorhergehenden Ansprüche.

8. Verfahren zur Herstellung eines Reifens (1) mit wenigstens einem radial außenliegenden äußeren Ringbereich (4) und wenigstens einem radial innenliegenden inneren Ringbereich (3) sowie wenigstens einem Übergangsbereich (8), in dem der äußere Ringbereich (4) und der innere Ringbereich (3) chemisch miteinander verbunden sind, zur Herstellung eines Reifens (1) nach einem der vorhergehenden Ansprüche, wobei der innere Ringbereich (3) aus einem ersten Ausgangsmaterial und der äußere Ringbereich (4) aus einem zweiten Ausgangsmaterial in einem gemeinsamen Pressvorgang unter Einfluss von Zeit, Temperatur und Druck erhältlich sind, wobei der innere Ringbereich (3) und der äußere Ringbereich (4) jeweils aus einem wenigstens eine Elastomerkomponente und wenigstens eine Duroplastkomponente und gegebenenfalls wenigstens eine weitere Komponente aufweisenden Ausgangsmaterial erhältlich sind, wobei das Ausgangsmaterial für den inneren Ringbereich (3) und das Ausgangsmaterial für den äußeren Ringbereich (4) wenigstens eine chemisch gleiche oder zu einer gleichen Gruppe gehörende Elastomerkomponente und wenigstens eine chemisch gleiche oder zu einer gleichen Gruppe gehörende Duroplastkomponente aufweisen, wobei das Ausgangsmaterial für den inneren Ringbereich (3) in einen ersten Aufnahmebereich einer Pressform und das Ausgangsmaterial für den äußeren Ringbereich (4) in einen benachbarten zweiten Aufnahmebereich der Pressform eingebracht wird, wobei die beiden Aufnahmebereiche für einen nachfolgenden Pressvorgang derart räumlich miteinander verbunden sind oder werden, dass die Ausgangsmaterialien beim Pressvorgang an den angrenzenden Rändern der Aufnahmebereiche für eine chemische Reaktion miteinander in Kontakt stehen und/oder kommen und beim Pressvorgang chemisch miteinander verbunden werden,

## Claims

1. Tyre (1) for a cable pulley (2), in particular a cable drive pulley or cable guide pulley, for passenger and/or material cableways, having at least one radially inner ring region (3) and at least one radially outer ring region (4), **characterized in that** the ring regions (3, 4) are obtainable under the influence of time, temperature and pressure from starting materials having different compositions and/or different concentrations of the components of the starting materials in a common pressing process, wherein the inner ring region (3) and the outer ring region (4) are each obtainable from a starting material comprising at least one elastomer component and at least one thermoset component and optionally at least one further component, wherein the starting material for the inner ring region (3) and the starting material for the outer ring region (4) comprise at least one elastomer component which is chemically identical or belongs to the same group and/or at least one thermoset component which is chemically identical or belongs to the same group, and wherein a common transition region (8) between the two ring regions (3, 4) is obtainable by chemical reaction of the starting materials with one another.

2. Tire (1) according to claim 1, **characterized in that** the proportion of the elastomer component in the starting material for the inner ring region (3) is greater than in the starting material for the outer ring region (4) and/or **in that** the proportion of the thermoset component in the starting material for the outer ring region (4) is greater than in the starting material for the inner ring region (3).

3. Tyre (1) according to one of the preceding claims, **characterized in that** the inner ring region (3), the outer ring region (4) and the transition region (8) are obtainable from the starting materials in a common manufacturing step under the influence of time, temperature and pressure.

4. Tyre (1) according to one of the preceding claims, **characterized in that** the elastomer component is selected from the group of rubbers, preferably synthetic rubbers, further preferably butadiene rubbers and/or styrene-butadiene rubbers and/or nitrile rubbers and/or chloroprene rubbers and/or ethylene-propylene rubbers and/or ethylene-propylene-diene rubbers or mixtures thereof, and/or **in that** the elastomer component is present in combination with at least one thermoplastic.

5. Tyre (1) according to any one of the preceding claims, **characterized in that** the thermoset component is selected from the group of resins, preferably reactive resins, more preferably phenolic resins.

6. Tyre (1) according to one of the preceding claims, **characterized in that** the starting material for the outer ring region (4) has the elastomer component in a total concentration of 10 to 50 wt.%, preferably of 15 to 45 wt.%, further preferably of 20 to 40 wt.%, and the thermoset component in a total concentration of 10 to 60 wt.%, preferably of 15 to 50 wt.%, further preferably of 20 to 40 wt.%, and/or **in that** the starting material for the inner ring region (3) has the elastomer component in a total concentration of 20 to 75 wt.%, preferably of 30 to 65 wt.%, further preferably of 30 to 65 wt.%, further preferably of 20 to 40 wt.%.% by weight, and/or **in that** the starting material for the inner ring region (3) has the elastomer component in a total concentration of from 20 to 75% by weight, preferably from 30 to 65% by weight, more preferably from 35 to 60% by weight, and the thermoset component in a total concentration of from 1 to 30% by weight, preferably from 5 to 20% by weight, in each case based on the total mass of the starting material.

7. Pulley (2) comprising a tyre (1) according to any one of the preceding claims.

8. Method for producing a tyre (1) having at least one radially outer ring region (4) and at least one radially inner ring region (3), as well as at least one transition region (8) in which the outer ring region (4) and the inner ring region (3) are chemically bonded to one another, for producing a tyre (1) according to one of the preceding claims, wherein the inner ring region (3) is obtainable from a first starting material and the outer ring region (4) is obtainable from a second starting material in a common pressing process under the influence of time, temperature and pressure, wherein the inner ring region (3) and the outer ring region (4) are each obtainable from a starting material comprising at least one elastomer component and at least one thermoset component and optionally at least one further component, wherein the starting material for the inner ring region (3) and the starting material for the outer ring region (4) comprise at least one elastomer component which is chemically the same or belongs to the same group and at least one thermoset component which is chemically the same or belongs to the same group, wherein the starting material for the inner ring region (3) is introduced into a first receiving region of a press mould and the starting material for the outer ring region (4) is introduced into an adjacent second receiving region of the press mould, wherein the two receiving regions are or will be spatially connected to one another for a subsequent pressing operation in such a way that the starting materials are and/or come into contact with one another at the adjacent edges of the receiving regions for a chemical reaction during the pressing operation and are chemically connected to one another during the pressing operation.

## Revendications

1. Pneu (1) pour une poulie à câble (2), en particulier une poulie d'entraînement à câble ou une poulie de guidage de câble, pour des installations à câbles transportant des personnes et/ou du matériel, doté d'au moins une zone annulaire radialement intérieure (3) et d'au moins une zone annulaire radialement extérieure (4), **caractérisé en ce que** les zones annulaires (3, 4) peuvent être obtenues sous l'influence du temps, de la température et de la pression à partir de matières premières ayant différente composition et/ou différente concentration des composants des matières premières dans un processus de pressage commun, la zone annulaire intérieure (3) et la zone annulaire extérieure (4) pouvant être obtenues respectivement à partir d'une matière première ayant au moins un composant élastomère et au moins un composant thermodurcissable et éventuellement au moins un autre composant, la matière première pour la zone annulaire interne (3) et la matière première pour la zone annulaire externe (4) présentant au moins un composant chimiquement identique ou du même groupe appartenant au composant élastomère et/ou au moins un composant chimiquement identique ou appartenant au même groupe thermodurcissable et une zone de transition commune (8) entre les deux zones annulaires (3, 4) pouvant être obtenue par réaction chimique des matières de départ entre elles.

2. Pneu (1) selon la revendication 1, **caractérisé en ce que** la proportion du composant élastomère dans la matière première pour la zone annulaire intérieure (3) est supérieure à celle de la matière première pour la zone annulaire extérieure (4) et/ou que la proportion du composant thermodurcissable dans la matière première pour la zone annulaire extérieure (4) est supérieure à celle dans la matière première pour la zone annulaire intérieure (3).

3. Pneu (1) selon l'une des revendications précédentes, **caractérisé en ce que** la zone annulaire intérieure (3), la zone annulaire extérieure (4) et la zone de transition (8) peuvent être obtenues à partir des matières de départ dans une étape de fabrication commune sous l'influence du temps, de la température et de la pression.

4. Pneu (1) selon l'une des revendications précédentes, **caractérisé en ce que** le composant élastomère est choisi dans le groupe des caoutchoucs, de préférence des caoutchoucs synthétiques, plus préférentiellement des caoutchoucs butadiène et/ou des caoutchoucs styrène-butadiène et/ou des caoutchoucs nitriles et/ou des caoutchoucs chloroprène et/ou des caoutchoucs éthylène-propylène et/ou des caoutchoucs éthylène-propylène-diène ou leurs mélanges, et/ou que le composant élastomère est présent dans un composite ayant au moins un thermoplastique.

5. Pneu (1) selon l'une des revendications précédentes, **caractérisé en ce que** le composant thermodurcissable est choisi dans le groupe des résines, de préférence des résines réactives, plus préférentiellement des résines phénoliques.

6. Pneu (1) selon l'une des revendications précédentes, **caractérisé en ce que** la matière première pour la zone annulaire extérieure (4) contient le composant élastomère à une concentration totale de 10 à 50 % en poids, de préférence de 15 à 45 % en poids, plus préférentiellement de 20 à 40 % en poids, et le composant thermodurcissable à une concentration totale de 10 à 60 % en poids, de préférence de 15 à 50 % en poids, plus préférentiellement de 20 à 40 % en poids, et/ou que la matière première pour la zone annulaire intérieure (3) contient le composant élastomère à une concentration totale de 20 à 75 % en poids, de préférence de 30 à 65 % en poids, plus préférentiellement de 35 à 60 % en poids, et le composant thermodurcissable à une concentration totale de 1 à 30 % en poids, de préférence de 5 à 20 % en poids, chaque fois rapporté à la masse totale de la matière de départ.

7. Poulie à câble (2) avec un pneu (1) selon l'une des revendications précédentes.

8. Procédé de fabrication d'un pneu (1) doté d'au moins une zone annulaire radialement extérieure (4) et d'au moins une zone annulaire radialement intérieure (3) ainsi que d'au moins une zone de transition (8) dans laquelle la zone annulaire extérieure (4) et la zone annulaire intérieure (3) sont liées chimiquement l'une à l'autre, pour la fabrication d'un pneu (1) selon l'une des revendications précédentes, la zone annulaire intérieure (3) pouvant être obtenue à partir d'une première matière première et la zone annulaire extérieure (4) pouvant être obtenue à partir d'une seconde matière première dans un processus de pressage commun sous l'influence du temps, de la température et de la pression, la zone annulaire intérieure (3) et la zone annulaire extérieure (4) pouvant être obtenues respectivement à partir d'une matière première comprenant au moins un composant élastomère et au moins un composant thermodurcissable et éventuellement au moins un autre composant, la matière première pour la zone annulaire intérieure (3) et la matière première pour la zone annulaire extérieure (4) ayant au moins un composant élastomère chimiquement identique ou appartenant au même groupe et au moins un composant thermodurcissable chimiquement identique ou appartenant au même groupe, la matière première pour la zone annulaire intérieure (3) étant introduite dans une première zone de réception d'un moule de presse et la matière première pour la zone annulaire extérieure (4) étant introduite dans une seconde zone de réception adjacente du moule de presse, les deux zones de réception étant spatialement reliées l'une à l'autre pour un processus de pressage ultérieur de manière à ce que les matières de départ soient et/ou viennent en contact les unes avec les autres pendant le processus de pressage au niveau des bords adjacents des zones de réception pour une réaction chimique et soient chimiquement liées les unes aux autres pendant le processus de pressage.
